# EUROPÄISCHE PATENTSCHRIFT

(11) **EP 1 067 367 B1**
(45) Veröffentlichungstag und Bekanntmachung des Hinweises auf die Patenterteilung: **22.10.2003**
(21) Anmeldenummer: 99112891.9
(22) Anmeldetag: 03.07.1999
(51) Int. Cl.: G01F 15/00, G07F 15/00

(54) **Vorrichtung zum Freigeben oder Sperren der Abgabe von Gas**
Device for releasing or blocking of gas delivery
Appareil pour relâcher ou bloquer le délivrage de gaz

(43) Veröffentlichungstag der Anmeldung: 10.01.2001
(73) Patentinhaber: GMT GASELAN Gas-, Mess- und Regeltechnik GmbH & Co. KG, 64521 Gross-Gerau (DE); Inotech GmbH, 76187 Karlsruhe (DE)
(72) Erfinder: Ackermann, Otto, 65479 Raunheim (DE); Boppré, Jürgen, 65207 Wiesbaden (DE); Fröschle, Joachim, 64625 Bensheim (DE); Zabel, Reiner, 75203 Königsbach-Stein (DE); Schneiderat, Ralf, 76337 Waldbronn (DE)
(74) Vertreter: Schieferdecker, Lutz, Dipl.-Ing.

(56) Entgegenhaltungen:
- EP-A- 0 843 288
- WO-A-96/03721
- WO-A-98/52167
- DE-A- 19 901 363
- DE-C- 19 730 171
- GB-A- 2 220 975
- GB-A- 2 295 443

## Beschreibung

Die Erfindung bezieht sich auf einen Bausatz zum Freigeben oder Sperren der Abgabe von Gas, wie er im Oberbegriff des Patentanspruchs 1 beschrieben ist.

Eine entsprechende Vorrichtung mit einem Gaszähler sowie mit einer Schließeinrichtung samt Stelleinrichtung für das Verschlußorgan und mit einer Steuereinrichtung, die außerhalb des Gehäuses des Gaszählers angeordnet sind, ist aus WO-A-96 03721 bekannt. Dort sind die Schließeinrichtung und die Steuereinrichtung als Module mit jeweils eigenem Gehäuse ausgeführt, die aneinander angepaßte Ausrichtmittel aufweisen und miteinander verbunden sind.

Gaszähler mit diesen Merkmalen geben einem Verbraucher die Möglichkeit, mittels einer aufladbaren Chipkarte oder Magnetkarte Gas bis zu einer vorbestimmten Menge zu entnehmen, die der geleisteten Vorauszahlung beim Erwerb oder durch Nachladen der Chipkarte entspricht. Dadurch vereinfacht sich für den Gaslieferanten die Abrechnung, da kein Ablesen des Gaszählers mehr erforderlich ist, und ebenso wird vermieden, dass der Verbraucher die Bezahlung des verbrauchten Gases schuldig bleibt. Besonders zweckmäßig ist die Gasentnahme mittels Chipkarte auch in allen den Fällen, in denen wechselnde Parteien als Gasverbraucher in Betracht kommen, so beispielsweise auf Campingplätzen oder auch bei Mieterwechseln in Haushalten.

Die Montage der Bauteile kann flexibel in Anpassung an die jeweiligen örtlichen Gegebenheiten erfolgen. Lediglich der Verbrauchssensor, beispielsweise ein Impulsfühler, der auf die Bewegungen eines der Zählräder des Zählwerks des Gaszählers reagiert, ist dem Zählwerk direkt zugeordnet, kann aber an der Außenseite des Gehäuses des Gaszählers angebracht werden. Über eine Signalleitung können die Schließeinrichtung und die Steuereinrichtung im Abstand zum Gaszähler und bevorzugt in Gasströmungsrichtung hinter diesem angeordnet werden.

Bei der bekannten Vorrichtung müssen jedoch die Schließeinrichtung und die Steuereinrichtung mechanisch direkt aneinander angeschlossen sein. Hierin ist ein Nachteil zu sehen, weil es häufig sinnvoll ist, die Steuereinrichtung verbraucherfreundlich entfernt vom Gaszähler und der Schließeinrichtung beispielsweise in einem anderen Raum und nahe beim gasbetriebenen Verbrauchsgerät anzuordnen.

Die Erfindung wird durch die Merkmale des Kennzeichens des Patentanspruchs 1 definiert.

Zweckmäßige Ausgestaltungen und Weiterbildungen der Erfindung ergeben sich aus den Unteransprüchen.

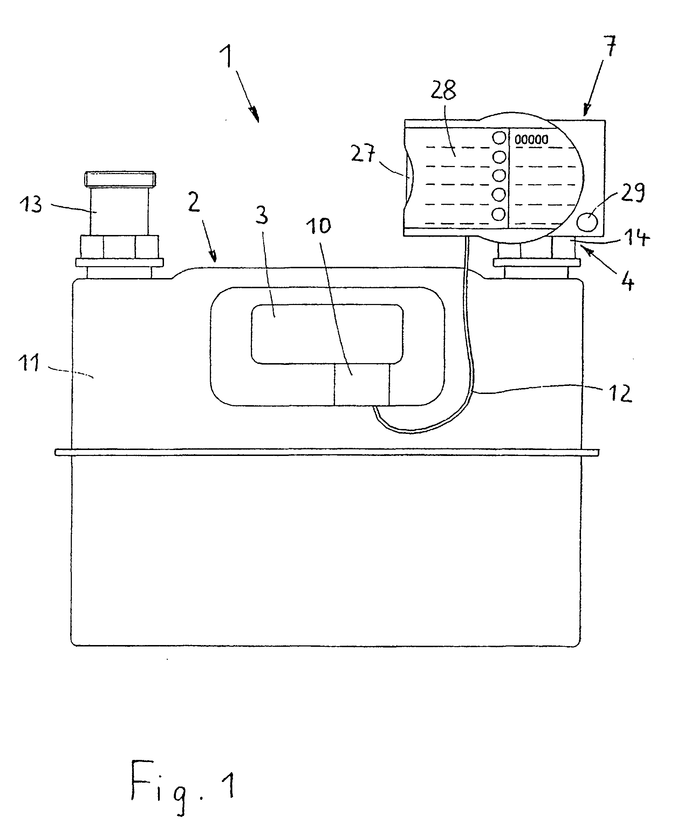

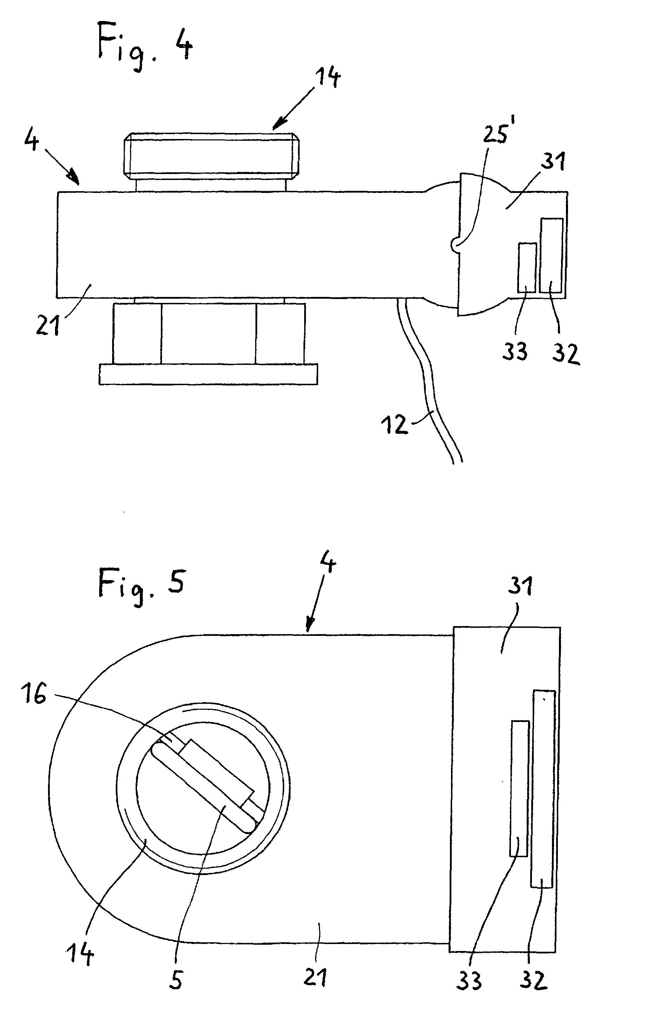

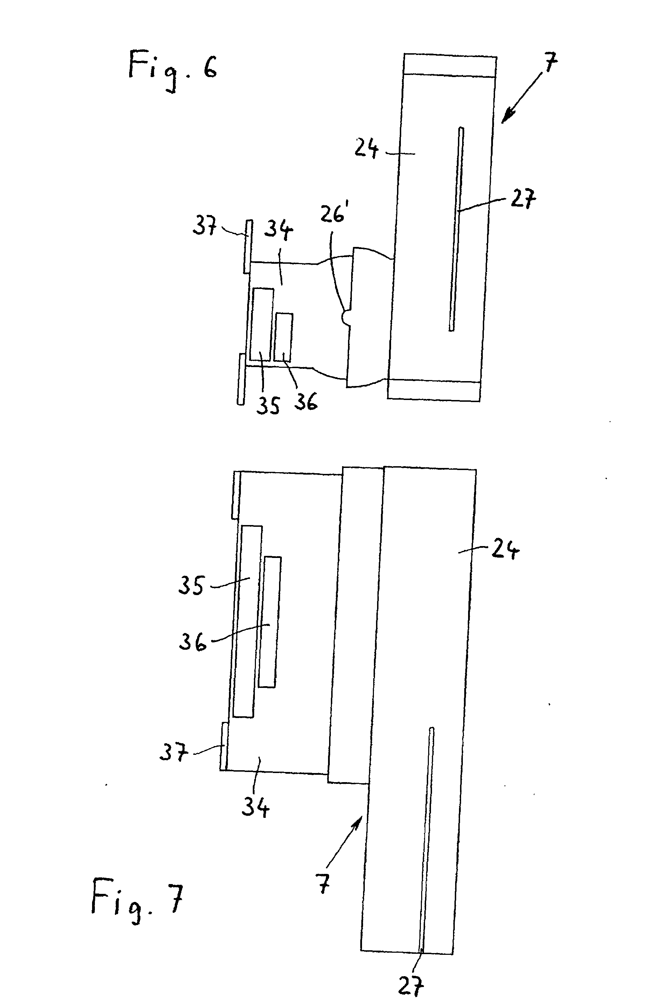

Ein Ausführungsbeispiel der Erfindung wird nachfolgend anhand der schematischen Zeichnung näher erläutert. Dabei betreffen die Figuren 1 bis 3, die Einzelheiten der Schließeinrichtung und der Steuereinrichtung zeigen, die Nutzung des erfindungsgemäßen Bausatzes für eine Anordnung, bei der die Schließeinrichtung und die Steuereinrichtung wie bekannt unmittelbar aneinander angeschlossen sind, während die Figuren 4 bis 7 die Anordnung betreffen, bei der die Schließeinrichtung und die Steuereinrichtung im Abstand zueinander angeordnet sind. Im einzelnen zeigen:
- Figur 1: eine Vorderansicht auf die Vorrichtung mit Blick auf das Zählwerk des Gaszählers und auf die Steuereinheit;
- Figur 2: eine vergrößerte Seitenansicht auf die Anordnung aus der Schließeinrichtung und der Steuereinrichtung, wobei erstere längs Linie II-II in Figur 3 vertikal geschnitten ist;
- Figur 3: die Schließeinrichtung und die Steuereinrichtung in einem Horizontalschnitt längs Linie III-III in Figur 2;
- Figur 4: die Schließeinrichtung in einer Figur 2 entsprechenden Seitenansicht mit einer anstelle der Steuereinrichtung angeschlossenen Kappe;
- Figur 5: eine Draufsicht auf die Anordnung gemäß Figur 4;
- Figur 6: die von der Schließeinrichtung getrennte Steuereinrichtung in einer Seitenansicht gemäß Figur 2 mit einer anstelle der Schließeinrichtung angeschlossenen Befestigungskappe; und
- Figur 7: die Anordnung gemäß Figur 6 in Draufsicht.

Die in Figuren 1 bis 3 dargestellte Vorrichtung 1 zum Freigeben oder Sperren der Abgabe von Gas weist einen üblichen Gaszähler 2, beispielsweise einen Haushaltsgaszähler, mit einem Zählwerk 3, eine Schließeinrichtungen 4 mit einer Verschlußklappe 5 und einer Stelleinrichtung 6, eine Steuereinrichtung 7 mit einem Lesegerät 8 für Chipkarten oder Magnetkarten und einer Steuerelektronik 9 sowie einen Verbrauchssensor 10 auf, der dem Zählwerk 3 zugeordnet und als Impulsfühler außenseitig am Gehäuse 11 des Gaszählers 2 angebracht ist sowie über eine Signalleitung 12 mit der Schließeinrichtung 4 bzw. mit der Steuereinrichtung 7 verbunden ist.

Der Gaszähler 2 ist mit einem Einlaßstutzen 13 und einem Auslaßstutzen 14 versehen, der einen hinter dem Gaszähler 2 befindlichen Gasleitungsabschnitt 15 bildet, dem die Schließeinrichtung 4 zugeordnet ist.

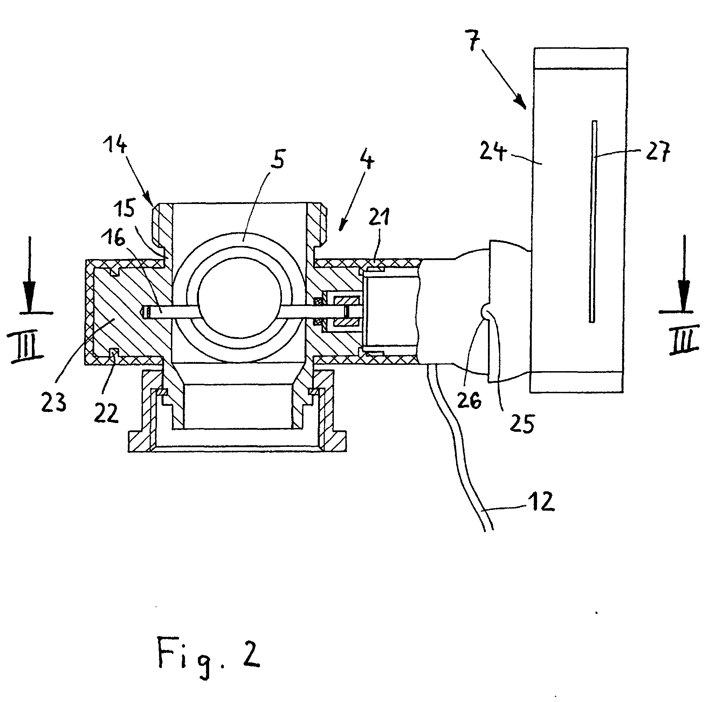

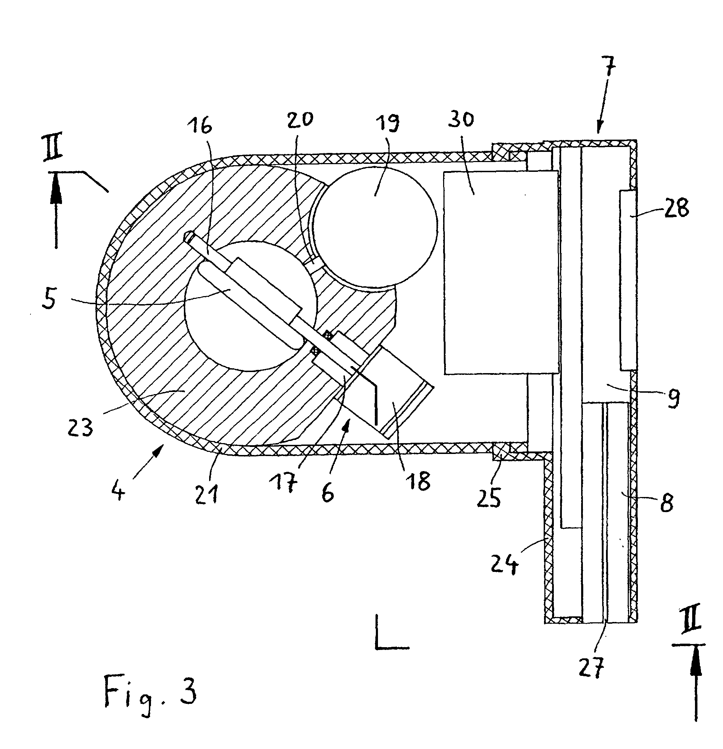

Dementsprechend ist die mittels einer Schwenkwelle 16 gelagerte Verschlußklappe 5 innerhalb des Gasleitungsabschnitts 15 angeordnet und in bekannter Weise um etwa 90° zwischen der in Figuren 2 und 3 gezeigten Stellung zum Freigeben der Gasabgabe und einer den Leitungsquerschnitt ausfüllenden Schließstellung zum Sperren der Gasabgabe verschwenkbar. Zu diesem Verschwenken ist die Stelleinrichtung 6 mit einem umkehrbar antreibbaren Stellmotor 18 versehen, der über ein Getriebe 17 mit der Schwenkwelle 16 verbunden ist und über die Steuereinrichtung 7 gesteuert wird. Ein nicht dargestellter Stellungsfühler meldet der Steuereinrichtung 7, ob sich die Verschlußklappe 5 in der Freigabestellung oder in der Sperrstellung befindet.

Aus Sicherheitsgründen ist gemäß Figur 3 auch ein Gasdruckschalter 19 vorgesehen, der über eine Druckfühlbohrung 20 den Gasdruck im Gasleitungsabschnitt 15 hinter der Verschlußklappe 5 feststellt und in Verbindung mit der Steuereinrichtung 7 ein Öffnen der geschlossenen Verschlußklappe 5 verhindert, falls der Gasdruck keinen Mindestwert erreicht. Auch bei geschlossener Verschlußklappe baut sich nämlich infolge von Undichtigkeiten ein Gasdruck hinter der Verschlußklappe 5 auf, sofern nicht ein angeschlossenes Gasgerät undicht ist oder sein Gashahn nach der Benutzung nicht ordnungsgemäß verschlossen wurde.

Wie ebenfalls aus Figur 2 zu ersehen, weist die Schließeinrichtung 4 ein Gehäuse 21 auf, das über Vorsprünge 22 formschlüssig mit dem radial erweiterten Lagerabschnitt 23 des Gasleitungsabschnitts 15 verbunden ist. Mit dem Gehäuse 21 der Schließeinrichtung 4 ist das Gehäuse 24 der Steuereinrichtung 7 fest verbunden, wobei Rastvorsprünge 25 am Gehäuse 24, die in Rastvertiefungen 26 des Gehäuses 21 eingreifen, für eine exakte gegenseitige Ausrichtung der beiden Gehäuse 21 und 24 sorgen.

Dem Lesegerät 8 der Steuereinrichtung 7 ist ein schlitzförmiger Kartenschacht 27 zum Einführen eines frei programmierbaren Datenträgers beispielsweise in Gestalt einer Chipkarte oder Magnetkarte zugeordnet. Die hiermit verbundene Technologie ist grundsätzlich bekannt und gestattet in Verbindung mit der Steuerelektronik 9 die Anzeige von Daten auf einem Display 28, beispielsweise auch die mittels der eingeführten Karte noch entnehmbare Gasmenge. Durch Drücken einer Taste 29 lassen sich der Reihe nach verschiedene Sachverhalte abfragen, was in Figur 1 durch verschiedene Positionen auf dem Display 28 angedeutet ist.

Wie bereits ausgeführt erhält die Steuereinrichtung 7 Informationen bzw. Daten nicht nur vom in den Kartenschacht 27 eingeführten Datenträger sondern auch vom dem Zählwerk 3 zugeordneten Verbrauchssensor 10 sowie von der Schließeinrichtung 4, die so gesteuert wird, daß mittels der Chipkarte einzelne Gasmengen bis zu einer maximalen Gesamtgasmenge entnommen werden können. Die entsprechende Technologie ist bekannt und bedarf hier keiner weiteren Erörterung.

Für die Energieversorgung sowohl der Schließeinrichtung 4 wie der Steuereinrichtung 7 ist eine gemeinsame Batterie 30 vorgesehen, die dementsprechend gemäß Figur 3 im Übergangsbereich zwischen den beiden Einrichtungen 4 und 7 innerhalb der Gehäuse 21 und 24 angeordnet ist.

Gemäß Figuren 1 bis 3 sind die Schließeinrichtung 4 und die mit ihr verbundene Steuereinrichtung 7 außerhalb des Gaszählergehäuses 11 aber in dessen Nähe angeordnet. Die Steuereinrichtung 7 kann jedoch auch entfernt beispielsweise in einem anderen Raum und vorteilhaft beim Verbrauchsgerät angeordnet werden. Auf diese Ausführungsform sind die Figuren 4 bis 7 gerichtet. Dort sind die als separate Module ausgeführte Schließeinrichtung 4 und Steuereinrichtung 7 voneinander getrennt.

Gemäß Figuren 4 und 5 ist das Gehäuse 21 der Schließeinrichtung 4 durch eine Kappe 31 verschlossen, die einen dem Anschlußbereich des Gehäuses 24 der Steuereinrichtung 7 entsprechenden Anschlußbereich mit Rastvorsprüngen 25' aufweist. Zur Datenübertragung per Funk mit der entfernt angeordneten Steuereinrichtung 7 sind in die Kappe 31 ein Sender 32 und ein Empfänger 33 eingebaut.

In ähnlicher Weise ist der Steuereinrichtung 7 bzw. ihrem Gehäuse 24 eine Befestigungskappe 34 mit den Rastvorsprüngen 25 zugeordneten Rastvertiefungen 26' zugeordnet. Auch die Befestigungskappe 34 enthält einen Sender 35 und einen Empfänger 36 für die Datenkommunikation zwischen der Steuereinrichtung 7 und der Schließeinrichtung 4, wobei der Sender 35 und der Empfänger 36 auf den Empfänger 33 bzw. den Sender 32 abgestimmt sind.

Da bei dieser Ausführungsform mit von der Schließeinrichtung 4 räumlich getrennter Steuereinrichtung 7 letztere gesondert montiert werden muß, ist die Befestigungskappe 34 mit Befestigungslaschen 37 versehen, die eine bequeme Wandbefestigung ermöglichen.

## Patentansprüche

1. Vorrichtung zum Freigeben oder Sperren der Abgabe von Gas, das durch einen Gaszähler (2), insbesondere einen Haushaltsgaszähler, strömt, bestehend aus einer Schließeinrichtung (4), die ein mittels einer Stelleinrichtung (6) zwischen einer Freigabestellung und einer Sperrstellung zum Öffnen bzw. Schließen eines Gasleitungsabschnitts (15) verlagerbares Verschlußorgan (5) sowie eine Signalleitung (12) mit einem Verbrauchssensor (10) zur Verbindung mit dem Gaszähler (2) aufweist, und aus einer der Stelleinrichtung (6) zugeordneten Steuereinrichtung (7), die auf einen frei programmierbaren Datenträger, insbesondere eine Chipkarte, anspricht, wobei die Schließeinrichtung (4) und die Steuereinrichtung (7) als außerhalb des Gehäuses (11) des Gaszählers (2) anzuordnende Module mit jeweils eigenem Gehäuse (21, 24) ausgeführt sind, **dadurch gekennzeichnet, dass** das Gehäuse (21) der Schließeinrichtung (4) ein Ausrichtmittel (26) und eine Gehäusekappe (31) mit einem korrespondierenden Ausrichtmittel (25') und das Gehäuse (24) der Steuereinrichtung (7) ein Ausrichtmittel (25) und eine Gehäusekappe (34) mit einem korrespondierenden Ausrichtmittel (26') aufweisen und die beiden Gehäusekappen (31, 34) jeweils einen Sender (32, 35) und einen Empfänger (33, 36) zur Funkübertragung von Signalen bzw. Daten zwischen der Schließeinrichtung (4) und der Steuereinrichtung (7) aufweisen, so dass die Module (21, 24) voneinander entfernt montierbar sind, und dass die Ausrichtmittel (25, 26) der beiden Gehäuse (21, 24) ebenfalls miteinander korrespondieren, so dass sie unter Weglassen der Gehäusekappen (31, 34) auch direkt miteinander verbindbar sind.

2. Vorrichtung nach Anspruch 1, **dadurch gekennzeichnet, dass** die Ausrichtmittel (25, 25'; 26, 26') von formschlüssig ineinander greifenden Rastvorsprüngen und Rastvertiefungen gebildet sind.

3. Vorrichtung nach Anspruch 1 oder 2, **dadurch gekennzeichnet, dass** das Verschlußorgan der Schließeinrichtung (4) eine verschwenkbare Ventilklappe (5) ist.

## Claims

1. Device for freeing or blocking the delivery of gas, which flows through a gas meter (2), particularly a domestic gas meter, consisting of a closing device (4), which comprises a closure element (5), which is displaceable by means of a setting device (6) between a release setting and a blocking setting for opening and closing, respectively, a gas duct section (15), as well as a signal line (12) with a consumption sensor (10) for connection with the gas meter (2), and of a control device (7), which is associated with the setting device (6) and which responds to a freely programmable data carrier, particularly a chip card, wherein the closing device (4) and the control device (7) are executed as modules, which are to be arranged outside the housing (11) of the gas meter (2), each with a respective own housing (21, 24), **characterised in that** the housing (21) of the closing device (4) has an orienting means (26) and a housing (31) with a corresponding orienting means (25') and the housing (24) of the control device (7) has an orienting means (25) and a housing cap (34) with a corresponding orienting means (26') and the two housing caps (31, 34) each have a transmitter (32, 35) and a receiver (33, 36) for radio transmission of signals or data between the dosing device (4) and the control device (7) so that the modules (21, 24) can be mounted separately from one another, and that the orienting means (25, 26) of the two housings (21, 24) similarly correspond with one another so that they can also be directly connected together with omission of the housing caps (31, 34).

2. Device according to claim 1, **characterised in that** the orienting means (25, 25'; 26, 26') are formed by mechanically positively interengaging detent projections and detent depressions.

3. Device according to claim 1 or 2, **characterised in that** the closure element of the closing device (4) is a pivotable valve flap (5).

## Revendications

1. Dispositif pour libérer ou bloquer la distribution de gaz passant par un compteur de gaz (2), notamment un compteur de gaz domestique, composé d'un dispositif de fermeture (4) qui présente un organe de verrouillage (5) qu'un dispositif de réglage (6) peut faire passer d'une position de libération à une position de blocage et inversement pour respectivement ouvrir et fermer un segment de conduite de gaz (15), et une ligne de signalisation (12) dotée d'un capteur de consommation (10) destiné à être relié au compteur de gaz (2), et d'un dispositif de commande (7) associé au dispositif de réglage (6), qui réagit à un support de données programmable librement, notamment à une carte à puce, sachant que le dispositif de fermeture (4) et le dispositif de commande (7) sont réalisés sous forme de modules à disposer en dehors du boîtier (11) du compteur de gaz (2) et possédant chacun leur propre boîtier (21, 24), **caractérisé en ce que** le boîtier (21) du dispositif de fermeture (4) présente un détrompeur (26) et un capot de boîtier (31) muni d'un détrompeur complémentaire (25'), et le boîtier (24) du dispositif de commande (7) présente, un détrompeur (25) et un capot de boîtier (34) doté d'un détrompeur complémentaire (26'), et les deux capots de boîtier (31, 34) présentent chacun un émetteur (32, 35) et un récepteur (33, 36) pour la radiotransmission de signaux ou de données entre le dispositif de fermeture (4) et le dispositif de commande (7), si bien que les modules (21,24) peuvent être montés à distance l'un de l'autre, et **en ce que** les détrompeurs (25, 26) des deux boîtiers (21, 24) coïncident également entre eux, de sorte que, si l'on supprime les capots de boîtier (31, 34), ceux-ci peuvent aussi être directement assemblés.

2. Dispositif selon la revendication 1, **caractérisé en ce que** les détrompeurs (25, 25' ; 26, 26') sont constitués par des saillies et des encoches s'encastrant l'une dans l'autre avec un engagement positif.

3. Dispositif selon la revendication 1 ou 2, **caractérisé en ce que** l'organe de verrouillage du dispositif de fermeture (4) est un clapet pivotant (5).
